# EUROPÄISCHE PATENTSCHRIFT

(11) **EP 4 043 536 B1**
(45) Veröffentlichungstag und Bekanntmachung des Hinweises auf die Patenterteilung: **02.04.2025**
(21) Anmeldenummer: 21156830.8
(22) Anmeldetag: 12.02.2021
(51) Int. Cl.: C10B 43/02, C10B 45/00, C10B 57/00, C09C 1/56

(54) **VORRICHTUNG UND VERFAHREN ZUR NASSEN RUSS-AUFBEREITUNG**
DEVICE AND METHOD FOR WET CARBON BLACK PREPARATION
DISPOSITIF ET PROCÉDÉ DE TRAITEMENT HUMIDE DU NOIR DE CARBONE

(43) Veröffentlichungstag der Anmeldung: 17.08.2022
(73) Patentinhaber: Grimm, Bernhard, 97753 Karlstadt (DE); Grimm, Achim, 97753 Karlstadt (DE)
(72) Erfinder: Grimm, Bernhard, 97753 Karlstadt (DE); Grimm, Achim, 97753 Karlstadt (DE)
(74) Vertreter: advotec.

(56) Entgegenhaltungen:
- CN-A- 110 330 203
- DE-A1- 102016 015 591
- KR-A- 20160 050 130
- US-A1- 2017 240 813

## Beschreibung

Die Erfindung betrifft ein Verfahren und eine Vorrichtung zur Aufbereitung von Carbon Black bzw. (Industrie-) Ruß aus einem Pyrolysereaktor.

Jährlich fallen weltweit hohe Mengen an Altreifen und Kunststoffen an, die stofflich verwertet werden sollten. Im Rahmen der Verwertung können als Produkte Stahl, Carbon Black bzw. Industrieruß und/oder Pyrolyseöl gewonnen werden. Carbon Black kann zu über 90 % als Füllstoff in der Gummiindustrie, hauptsächlich für Fahrzeugreifen und technische Gummiartikel, wie Fördergurte, Schläuche und Dichtungsprofile, verwendet werden. Ferner kann Carbon Black als Schwarzpigment in Anwendungen wie Mascara, Graberde, Dekorpapier oder Fasern verwendet werden.

Die o.g. Produkte, insbesondere Carbon Black, können durch Pyrolyse in einem Pyrolysereaktor gewonnen werden. Die Pyrolyse läuft dabei bei einer Temperatur von ca. 250 - 700 °C ab. Das Carbon Black, d.h. der Ruß, aus dem Pyrolysereaktor weist daher typischerweise eine relativ hohe Temperatur und eine relativ hohe Reaktionsfähigkeit mit Sauerstoff auf. Ferner weist das Carbon Black aus dem Pyrolysereaktor typischerweise noch keine ausreichend hohe Qualität für eine weitere industrielle Anwendung auf.

Aus der KR 2016 0050130 A ist ein Verfahren zur Aufreinigung von Altreifen-Pyrolyseruß bekannt, mittels welchem Verunreinigungen, wie flüchtige Rückstände, anorganische Substanzen und Asche, entfernt werden können. Der anfallende Ruß wird in Wasser dispergiert und aufgeschlämmt, wobei die Rußaufschlämmung unter Verwendung einer Kugelmühle, einer Reibmühle oder dergleichen nassvermahlen wird.

Die DE 10 2016 015591 A1 offenbart ein Verfahren zur Aufbereitung von Carbon Black, bei welchem der anfallende Filterstaub anschließend üblicherweise der Verperlung, insbesondere der Trockenverperlung oder der Nassverperlung, zugeführt wird. Dabei ist die Trockenverperlung zu bevorzugen. Die Nassverperlung weist den Nachteil der Notwendigkeit des Einsatzes von Wasser auf, welches in einem späteren Verfahrensschritt wieder aufwendig entfernt werden muss.

In der US 2017/0240813 A1 sind ein Verfahren und eine Vorrichtung zur Herstellung von Rußpartikeln beschrieben. Das Verfahren umfasst die nachfolgenden Schritte des a) Bereitstellens erster Rußbasispartikel, des b) Bereitstellens zweiter Rußbasispartikel, des c) Mahlens der zweiten Rußbasispartikel, des d) Mischens der zweiten Rußbasispartikel in einen Partikelstrom der ersten Rußbasispartikel und des d) Pelletierens der ersten und zweiten Rußbasispartikel zu hybriden Rußpartikeln. Dabei kann bzw. können in Schritt d) Wasser und/oder Additive hinzugefügt werden.

Das vorliegende Dokument befasst sich mit der technischen Aufgabe, eine besonders sichere und qualitativ hochwertige Aufbereitung von rußhaltigem Material aus einem Pyrolysereaktor zu ermöglichen. Die Aufgabe wird durch jeden der unabhängigen Ansprüche gelöst. Bevorzugte Ausgestaltungen sind in den abhängigen Ansprüchen beschrieben.

Gemäß einem Aspekt wird eine Aufbereitungsvorrichtung für ein rußhaltiges Material aus einem Pyrolysereaktor beschrieben. Der Pyrolysereaktor kann z.B. ausgebildet sein, Fahrzeugreifen zu verarbeiten. Allgemein kann in dem Pyrolysereaktor ein Ausgangsprodukt, z.B. Altreifen oder Kunststoffe, verarbeitet werden. Dabei kann das Ausgangsprodukt unter Einwirkung von thermischer Energie bei Abwesenheit von Sauerstoff zersetzt werden, um das rußhaltige Material zu erzeugen. Das rußhaltige Material weist am Ausgang des Pyrolysereaktors typischerweise eine relative hohe Temperatur, z.B. 300°C oder höher, auf. Ferner weist das rußhaltige Material neben Industrieruß typischerweise eine oder mehrere weitere Fremdkomponenten (z.B. Metall) und/oder anderweitige Verunreinigungen auf.

Die Vorrichtung umfasst einen Wasserbehälter zur direkten Aufnahme des rußhaltigen Materials aus dem Pyrolysereaktor in einem Wasserbad, so dass ein nasses, rußhaltiges Material entsteht. Mit anderen Worten, das rußhaltige Material kann direkt aus dem Pyrolysereaktor in ein Wasserbad bzw. in ein Wasserschloss überführt werden. Die Vorrichtung ist dabei bevorzugt derart ausgebildet, dass das rußhaltige Material von dem Pyrolysereaktor in das Wasserbad geleitet wird, ohne mit Sauerstoff in Kontakt zu kommen. So kann eine sichere Entnahme des (heißen) rußhaltigen Materials aus dem Pyrolysereaktor ermöglicht werden. Insbesondere können so in zuverlässiger Weise exotherme Reaktionen des rußhaltigen Materials beherrscht werden. Insbesondere kann das rußhaltige Material im Wasserbad gekühlt werden, und es kann bewirkt werden, dass Oxidationsreaktionen kontrolliert ablaufen.

Die Vorrichtung kann z.B. einen zwischen dem Pyrolysereaktor und dem Wasserbehälter verlaufenden Schacht, insbesondere einen Fallschacht, umfassen, der ausgebildet ist, rußhaltiges Material aus dem Pyrolysereaktor direkt in das Wasserbad in dem Wasserbehälter zu leiten. Der Schacht ist bevorzugt luftdicht. Ferner kann der Schacht zumindest teilweise oder vollständig mit Wasser gefüllt sein. So kann in besonders zuverlässiger Weise vermieden werden, dass das rußhaltige Material aus dem Pyrolysereaktor mit Sauerstoff in Kontakt kommt.

Des Weiteren umfasst die Vorrichtung zumindest eine Nassmahlstufe, die eingerichtet ist, die durchschnittliche Partikelgröße von Rußpartikeln in dem nassen, rußhaltigen Material zu reduzieren, wobei die Vorrichtung eine Nassmahlstufe innerhalb des Wasserbehälters umfasst. Mit anderen Worten, die Vorrichtung ist eingerichtet das rußhaltige Material im nassen Zustand zu mahlen, insbesondere um die durchschnittliche Partikelgröße der Rußpartikel zu reduzieren. Das Mahlen im nassen Zustand ermöglicht eine sichere, effiziente und umweltschonende Aufbereitung des rußhaltigen Materials (insbesondere da Staubemissionen vermieden werden können).

Eine (erste) Nassmahlstufe der Vorrichtung ist direkt innerhalb des Wasserbehälters angeordnet, um eine besonders effiziente Vorrichtung bereitzustellen.

Alternativ oder ergänzend kann die Vorrichtung eine Mehrzahl von nacheinander angeordneten Nassmahlstufen aufweisen. Dabei kann der Feinheitsgrad der nacheinander angeordneten Nassmahlstufen (d.h. der Feinheitsgrad der in der jeweiligen Nassmahlstufe erzeugten Rußpartikel) mit jeder Nassmahlstufe ansteigen. Durch die Bereitstellung von mehreren Nassmahlstufen kann ein besonders feiner und/oder hochwertiger Industrieruß bzw. Carbon Black bereitgestellt werden.

Des Weiteren weist die Vorrichtung zumindest ein Entwässerungsmodul zur Entwässerung des nassen, rußhaltigen Materials oder eines daraus abgeleiteten Materials im Anschluss an die zumindest eine Nassmahlstufe auf. Das entwässerte (ggf. noch feuchte) rußhaltige Material kann dann in effizienter Weise in einer oder mehreren Anwendungen wiederverwendet werden.

Das in dem Entwässerungsmodul zurückgewonnene Wasser kann in den Wasserbehälter zurückgeführt werden. So kann die Effizienz der Aufbereitungsvorrichtung weiter erhöht werden.

Die Vorrichtung kann ein Trennmodul umfassen, das eingerichtet ist, im Anschluss an die zumindest eine Nassmahlstufe eine oder mehrere Fremdkomponenten, insbesondere Metall, aus dem nassen, rußhaltigen Material abzutrennen, so dass ein bereinigtes, nasses, rußhaltiges Material bereitgestellt wird. Das Trennmodul kann zu diesem Zweck ein Sieb und/oder einen Hydrozyklon und/oder ein Mittel für ein anderes Trennverfahren aufweisen. Durch das Abtrennen der einen oder mehreren Fremdkomponenten kann die Güte des aufbereiteten Industrierußes erhöht werden. Dabei ist die Abtrennung im Anschluss an die eine oder die mehreren Nassmahlstufen vorteilhaft, da durch die einen oder mehreren Fremdkomponenten die Mahlwirkung in den einen oder mehreren Nassmahlstufen erhöht werden kann.

Die Vorrichtung kann zumindest ein Behandlungsmodul umfassen, das eingerichtet ist, das nasse, rußhaltige Material oder ein davon abgeleitetes Material, insbesondere das bereinigte, nasse, rußhaltige Material, chemisch zu behandeln und/oder zu reinigen, so dass ein chemisch behandeltes, nasses, rußhaltiges Material bereitgestellt wird. Die chemische Reinigung und/oder Behandlung kann unter Verwendung zumindest einer chemischen Substanz, z.B. einer Säure, einer Lauge, eines Lösemittels, etc., durchgeführt werden. Die Vorrichtung kann ferner zumindest ein Neutralisierungsmodul umfassen, das eingerichtet ist, die eine oder die mehreren chemischen Substanzen, die in dem zumindest einen Behandlungsmodul verwendet wurden, zumindest teilweise oder vollständig zu neutralisieren.

Durch die Verwendung einer (optionalen) chemischen Reinigung und/oder Behandlung kann die Güte des aufbereiteten Industrierußes weiter erhöht werden.

Die Aufbereitungsvorrichtung kann ggf. eine Bypass-Leitung umfassen, die eingerichtet ist, das rußhaltige Material (aus dem Trennmodul) an der chemischen Reinigung und/oder Behandlung vorbei (ggf. direkt zu dem Entwässerungsmodul) zu führen. So kann bei Bedarf in effizienter Weise auf eine chemische Reinigung und/oder Behandlung verzichtet werden.

Die Vorrichtung kann ein Pelletiermodul umfassen, das eingerichtet ist, das (ggf. chemisch gereinigte und/oder behandelte) rußhaltige Material im Anschluss an das zumindest eine Entwässerungsmodul in Pellets zu pressen. Ferner kann die Vorrichtung ein Trocknungsmodul umfassen, das eingerichtet ist, die Pellets zu trocknen. Die Pellets aus Industrieruß können dann in effizienter Weise einer anderen Anwendung zugeführt werden.

Gemäß einem weiteren Aspekt wird ein Verfahren zur Aufbereitung eines rußhaltigen Materials aus einem Pyrolysereaktor beschrieben. Das Verfahren umfasst das Zuführen des rußhaltigen Materials aus dem Pyrolysereaktor (direkt) zu einem Wasserbad in einem Wasserbehälter, so dass ein nasses, rußhaltiges Material entsteht. Insbesondere kann das rußhaltige Material direkt aus dem Pyrolysereaktor in das Wasserbad überführt werden (ohne dabei mit Sauerstoff in Kontakt zu kommen), um nasses, rußhaltiges Material zu erzeugen.

Des Weiteren umfasst das Verfahren das Reduzieren der durchschnittlichen Partikelgröße von Rußpartikeln in dem nassen, rußhaltigen Material anhand von zumindest einer Nassmahlstufe. Eine Nassmahlstufe ist dabei direkt in dem Wasserbad angeordnet, dem das rußhaltige Material zugeführt wird. Das Verfahren umfasst ferner, im Anschluss an das Mahlen des nassen, rußhaltigen Materials, das Entwässern des nassen, rußhaltigen Materials oder eines daraus abgeleiteten Materials. Das im Rahmen der Entwässerung zurückgewonnene Wasser kann wieder dem Wasserbad zugeführt werden. So kann eine besonders effiziente Aufbereitung des rußhaltigen Materials bewirkt werden.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systeme in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigt
Fig. 1 eine beispielhafte Aufbereitungsvorrichtung für rußhaltiges Material aus einem Pyrolysereaktor; und
Fig. 2 ein Ablaufdiagramm eines beispielhaften Verfahrens zur Aufbereitung von rußhaltigem Material aus einem Pyrolysereaktor.

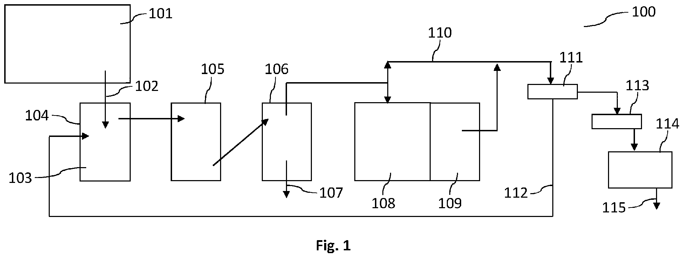

Wie eingangs dargelegt, befasst sich das vorliegende Dokument mit der sicheren und qualitativ hochwertigen Aufbereitung von Industrieruß auf Basis von rußhaltigem Material aus einem Pyrolysereaktor. In diesem Zusammenhang zeigt Fig. 1 eine beispielhafte Aufbereitungsvorrichtung 100 zur Nachbearbeitung von rußhaltigem Material 102 aus einem Pyrolysereaktor 101. Das rußhaltige Material 102 umfasst z.B. Carbon Black (d.h. Industrieruß) und ggf. Verunreinigungen und/oder Fremdkomponenten 107, wie z.B. Metall (insbesondere dann, wenn in dem Pyrolysereaktor 101 Autoreifen verarbeitet wurden).

Das heiße rußhaltige Material 102 kann direkt aus dem Pyrolysereaktor 101 in ein Wasserschloss bzw. in ein Wasserbad 103 übergeben werden, insbesondere um das rußhaltige Material 102 abzukühlen und/oder um das rußhaltige Material 102 vor einer exothermen Reaktion mit Sauerstoff zu schützen. Das Wasserschloss 103 ist in einem Wasserbehälter mit einer ersten Nassmahlstufe 104 von einer oder mehreren aufeinanderfolgenden Nassmahlstufen 104, 105 der Vorrichtung 100 angeordnet. Die eine oder die mehreren Nassmahlstufen 104, 105 sind jeweils eingerichtet das rußhaltige Material 102 zu zermahlen und/oder zu zerkleinern. Dieser Prozess erfolgt in vorteilhafter Weise im nassen Zustand des rußhaltigen Materials 102, um Rußstaub zu vermeiden.

Im Anschluss an das Zermahlen des rußhaltigen Materials 102 kann das Material 102 in einen Metallabscheider 106 (allgemein in ein Trennmodul) überführt werden, um einen Metallaustrag 107 aus dem Material 102 zu bewirken. Es kann daraufhin ein (von Metall) gereinigtes rußhaltiges Material bereitgestellt werden. Das gereinigte Material kann dann direkt (über einen Bypass 110) einem Entwässerungsmodul 111 zugeführt werden, das eingerichtet ist, dem gereinigten, gemahlenen Material Wasser zu entziehen. Das zurückgewonnene Wasser kann dann über einen Rücklauf 112 dem Wasserschloss 103 zugeführt werden, um eine ressourceneffiziente Aufbereitungsvorrichtung 100 bereitzustellen.

Alternativ kann das gereinigte, gemahlene, rußhaltige Material einem Behandlungs- bzw. Reinigungsmodul 108 zur Chemikalienbehandlung zugeführt werden. Die Chemikalienbehandlung kann darauf ausgelegt sein, Verunreinigungen in dem gereinigten, gemahlenen Material aufzulösen, um die Qualität des Industrierußes zu erhöhen. Zu diesem Zweck kann das Behandlungsmodul 108 einen oder mehrere Rührkessel umfassen. Ferner kann im Anschluss an die Chemikalienbehandlung ein Neutralisierungsmodul 109 verwendet werden, um etwaige Säuren, Laugen und/oder Lösungsmittel, die im Rahmen der Chemikalienbehandlung verwendet wurden, zu neutralisieren. Das behandelte Material kann dann dem Entwässerungsmodul 111 zugeführt werden.

Am Ausgang des Entwässerungsmoduls 111 wird entwässerter Industrieruß bereitgestellt, der in einem Pelletierer bzw. Pellitiermodul 113 zu Ruß-Pellets verarbeitet werden kann. Die Ruß-Pellets können dann in einem Trockner 114 getrocknet werden, um getrocknete Ruß-Pellets 115 bereitzustellen.

Es wird somit eine Aufbereitungsvorrichtung 100 beschrieben, die eine effiziente und zuverlässige Aufbereitung von Carbon Black bzw. Ruß ermöglicht, um zumindest eine handelsübliche Qualität zu erreichen. Das Carbon Black Gemisch 102 aus dem Reaktor 101 kann aufgrund seiner Feinheit und seiner schwarzen Farbe im trockenen Zustand zu Staub- und Umweltproblemen führen. Die Aufbereitung erfolgt daher im nassen Zustand, wodurch Staub- und Umweltprobleme zuverlässig vermieden werden können. Ferner kann durch die nasse Aufbereitung zuverlässig vermieden werden, dass das heiße Carbon Black Gemisch 102 aus dem Reaktor 101 (z.B. mit 500°C oder mehr) mit Sauerstoff in Kontakt kommt, wodurch eine exotherme Reaktion und ggf. ein Brand verursacht werden könnten.

Die Entaschung aus dem Reaktor 101 erfolgt somit mit dem Wasserschloss 103, wobei das Wasserschloss 103 den Carbon Black Austrag 102 vom Sauerstoffeintritt abtrennt. Das Wasserschloss 103 ist mit Wasser gefüllt, und ein Fallschacht, über den das Carbon Black Gemisch 102 aus dem Reaktor 101 gelangt, ist bevorzugt in dem Wasserschloss 103 abgetaucht. Die nasse Entaschung kühlt das Carbon Black Gemisch 102 ab. Ferner können eine exotherme Reaktion mit Sauerstoff und eine Staubentwicklung vermieden werden.

Die Weiterverarbeitung des Carbon Black Gemisches 102 kann (zumindest weitestgehend) im nassen und staubfreien Zustand vollzogen werden. Das Wasserschloss 103 kann mit oder ohne Rührwerk ausgeführt werden. Das Wasserschloss 103 kann ggf. als erste Stufe der Nassaufmahlung 104 genutzt werden (z.B. durch Verwendung eines Rührwerks). Dabei kann die Scherwirkung der in dem Carbon Black Gemisch 102 enthaltenen Metallteile zur Verbesserung der Aufmahlleistung genutzt werden.

Die Aufbereitungsvorrichtung 100 kann eine mehrstufige Nassaufmahlung 104, 105 aufweisen, um die Partikelgröße der Carbon Black Partikel in dem Carbon Black Gemisch 102 zu reduzieren. Dabei kann der Nassaufmahlungseffekt durch ggf. in dem Carbon Black Gemisch 102 enthaltene Metallteile verbessert werden. Ferner ist eine Nassaufmahlung 104, 105 aufgrund reduzierter Umweltprobleme (z.B. Staub, Staubexplosion, etc.) gegenüber einer Trockenvermahlung vorteilhaft.

Eine Trennung der Metallanteile 107 aus dem Carbon Black / Metallgemisch 102 kann mittels einer Trennapparatur 106, z.B. einem Hydrozyklon oder einem Siebapparat, erfolgen. Das abgetrennte Metall 107 ist weitgehend sauber und kann aus der Trennapparatur 106 abgezogen werden, und es kann im sauberen Zustand einer Wiederverwertung zugeführt werden.

Eine Carbon Black Aufmahlung kann dazu genutzt werden, eine bestimmte Partikelgröße der Carbon Black Partikel einzustellen. Dabei ist die Wiederverwertung von Carbon Black typischerweise umso effizienter, je kleiner die Partikelgröße ist.

Nach der Nassaufmahlung und der Metallabtrennung kann eine (optionale) Chemikalienbehandlung 108 zur Auflösung von störenden und verunreinigenden Inhaltsstoffen verwendet werden. Dadurch kann die Reinheit des Carbon Blacks weiter verbessert werden. Die Chemikalienbehandlung 108 kann in einem oder mehreren Rührkesseln erfolgen. Dabei können eine oder mehrere unterschiedliche Säuren, Laugen und/oder Lösemittel eingesetzt werden. Ferner kann die Carbon Black Suspension eine Neutralisationsstufe 109 durchlaufen. Ggf. kann ein Bypass 110 der Chemikalienbehandlungsstufe 108 bereitgestellt werden, um eine Chemikalienbehandlung des Carbon Blacks zu vermeiden.

Die Carbon Black Suspension kann mittels eines oder mehrerer Entwässerungsapparate 111 entwässert werden. In einem nachgeschalteten Pelletierer 113 kann das (ggf. noch feuchte) Material zu Pellets gepresst und in einem Pellettrockner 114 getrocknet werden. Die Carbon Black Pellets 115 können dann vermarktet werden. Zu diesem Zweck können die Pellets 115 verpackt werden. Alternativ kann das vorentwässerte, noch feuchte, Material vermarktet werden, um eventuell staubende Prozessschritte (in dem Pelletierer 113 und/oder in dem Pellettrockner 114) zu vermeiden.

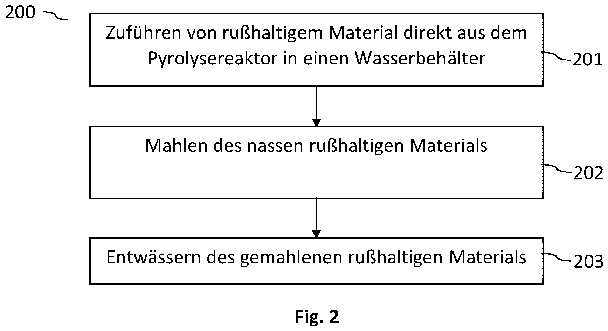

Fig. 2 zeigt ein Ablaufdiagramm eines beispielhaften Verfahrens 200 zur Aufbereitung eines rußhaltigen Materials 102 (in diesem Dokument auch als Carbon Black Gemisch bezeichnet) aus einem Pyrolysereaktor 101. Das Verfahren 200 kann durch die in diesem Dokument beschriebene Aufbereitungsvorrichtung 100 ausgeführt werden.

Das Verfahren 200 umfasst das Zuführen 201 des rußhaltigen Materials 102 aus dem Pyrolysereaktor 101 zu einem Wasserbad 103 in einem Wasserbehälter, so dass ein nasses, rußhaltiges Material entsteht. Zu diesem Zweck kann das rußhaltige Material 102 (das in dem Pyrolysereaktor 101 z.B. aus Altreifen gewonnen wurde) direkt aus dem Pyrolysereaktor 101 in den Wasserbehälter überführt werden, insbesondere derart, dass das (heiße) rußhaltige Material 102 nicht mit Sauerstoff in Kontakt kommt.

Das Verfahren 200 umfasst ferner das Reduzieren 202 der durchschnittlichen Partikelgröße von Rußpartikeln in dem nassen, rußhaltigen Material anhand von zumindest einer Nassmahlstufe 104, 105, wobei die Nassmahlstufe 104 direkt in dem Wasserbad angeordnet ist. Die Nassmahlstufen 104, 105 können dabei einen zunehmend hohen Feinheitsgrad aufweisen, um zunehmend feine Rußpartikel bereitzustellen. In einem bevorzugten Beispiel erfolgt das Mahlen, bevor eine oder mehrere Fremdkomponenten 107, insbesondere Metall, aus dem nassen, rußhaltigen Material 102 abgetrennt wird bzw. werden. So kann die Effektivität der einzelnen Nassmahlstufen 104, 105 erhöht werden.

Des Weiteren umfasst das Verfahren 200, im Anschluss an das Reduzieren 202 der durchschnittlichen Partikelgröße, das Entwässern 203 des nassen, rußhaltigen Materials oder eines daraus abgeleiteten Materials. Ferner kann das entwässerte Material in Pellets 115 gepresst werden.

Die in diesem Dokument beschriebenen Maßnahmen ermöglichen eine sichere, umweltschonende und effiziente Aufbereitung von rußhaltigem Material 102 aus einem Pyrolysereaktor 101.

## Patentansprüche

1. Aufbereitungsvorrichtung (100) für ein rußhaltiges Material (102) aus einem Pyrolysereaktor (101); wobei die Vorrichtung (100) umfasst,
- einen Wasserbehälter zur direkten Aufnahme des rußhaltigen Materials (102) aus dem Pyrolysereaktor (101) in einem Wasserbad (103), so dass ein nasses, rußhaltiges Material entsteht;
- zumindest eine Nassmahlstufe (104, 105), die eingerichtet ist, eine durchschnittliche Partikelgröße von Rußpartikeln in dem nassen, rußhaltigen Material zu reduzieren, wobei die Vorrichtung (100) eine Nassmahlstufe (104) innerhalb des Wasserbehälters umfasst; und
- zumindest ein Entwässerungsmodul (111) zur Entwässerung des nassen, rußhaltigen Materials oder eines daraus abgeleiteten Materials im Anschluss an die zumindest eine Nassmahlstufe (104, 105).

2. Aufbereitungsvorrichtung (100) gemäß einem der vorhergehenden Ansprüche, wobei
- die Vorrichtung (100) eine Mehrzahl von nacheinander angeordneten Nassmahlstufen (104, 105) umfasst; und
- insbesondere ein Feinheitsgrad der nacheinander angeordneten Nassmahlstufen (104, 105) mit jeder Nassmahlstufe (104, 105) ansteigt.

3. Aufbereitungsvorrichtung (100) gemäß einem der vorhergehenden Ansprüche, wobei
- die Vorrichtung (100) einen zwischen dem Pyrolysereaktor (101) und dem Wasserbehälter verlaufenden Schacht, insbesondere einen Fallschacht, umfasst, der ausgebildet ist, rußhaltiges Material (102) aus dem Pyrolysereaktor (101) direkt in das Wasserbad (103) in dem Wasserbehälter zu leiten;
- der Schacht insbesondere luftdicht ist; und
- der Schacht insbesondere zumindest teilweise mit Wasser gefüllt ist.

4. Aufbereitungsvorrichtung (100) gemäß einem der vorhergehenden Ansprüche, wobei die Vorrichtung (100) derart ausgebildet ist, dass das rußhaltige Material (102) von dem Pyrolysereaktor (101) in das Wasserbad (103) geleitet wird, ohne dabei mit Sauerstoff in Kontakt zu kommen.

5. Aufbereitungsvorrichtung (100) gemäß einem der vorhergehenden Ansprüche, wobei die Vorrichtung (100) ein Trennmodul (106) umfasst, das eingerichtet ist, im Anschluss an die zumindest eine Nassmahlstufe (104, 105) eine oder mehrere Fremdkomponenten (107), insbesondere Metall, aus dem nassen, rußhaltigen Material abzutrennen, so dass ein bereinigtes, nasses, rußhaltiges Material bereitgestellt wird.

6. Aufbereitungsvorrichtung (100) gemäß einem der vorhergehenden Ansprüche, wobei die Vorrichtung (100) zumindest ein Behandlungsmodul (108) umfasst, das eingerichtet ist, das nasse, rußhaltige Material oder ein davon abgeleitetes Material, insbesondere ein bereinigtes, nasses, rußhaltiges Material, chemisch zu reinigen und/oder zu behandeln, so dass ein chemisch behandeltes, nasses, rußhaltiges Material bereitgestellt wird.

7. Aufbereitungsvorrichtung (100) gemäß einem der vorhergehenden Ansprüche, wobei die Vorrichtung (100) zumindest ein Neutralisierungsmodul (109) umfasst, das eingerichtet ist, eine oder mehrere chemische Substanzen, insbesondere eine Säure und/oder eine Lauge, die in dem zumindest einen Behandlungsmodul (108) verwendet wurden, zumindest teilweise zu neutralisieren.

8. Aufbereitungsvorrichtung (100) gemäß einem der vorhergehenden Ansprüche, wobei die Vorrichtung (100) ein Pelletiermodul (113) umfasst, das eingerichtet ist, das rußhaltige Material im Anschluss an das zumindest eine Entwässerungsmodul (111) in Pellets zu pressen.

9. Aufbereitungsvorrichtung (100) gemäß Anspruch 8, wobei die Vorrichtung (100) ein Trocknungsmodul (114) umfasst, das eingerichtet ist, die Pellets zu trocknen.

10. Verfahren (200) zur Aufbereitung eines rußhaltigen Materials (102) aus einem Pyrolysereaktor (101); wobei das Verfahren (200) umfasst,
- Zuführen (201) des rußhaltigen Materials (102) aus dem Pyrolysereaktor (101) zu einem Wasserbad (103) in einem Wasserbehälter, so dass ein nasses, rußhaltiges Material entsteht;
- Reduzieren (202) einer durchschnittlichen Partikelgröße von Rußpartikeln in dem nassen, rußhaltigen Material anhand von zumindest einer Nassmahlstufe (104, 105), wobei eine Nassmahlstufe (104) direkt in dem Wasserbad angeordnet ist; und
- im Anschluss daran, Entwässern (203) des nassen, rußhaltigen Materials oder eines daraus abgeleiteten Materials.

## Claims

1. A treatment device (100) for a material (102) containing carbon black and originating from a pyrolysis reactor (101); the device comprising
- a water container for directly receiving the material (102) containing carbon black and originating from the pyrolysis reactor (101) in a water bath (103), thus yielding a wet material containing carbon black;
- at least one wet-milling stage (104, 105) which is configured to reduce an average particle size of carbon black particles in the wet material containing carbon black, the device (100) comprising a wet-milling stage (104) within the water container; and
- at least one dehydrating module (111) for dehydrating the wet material containing carbon black or a material derived therefrom following the at least one wet-milling stage (104, 105).

2. The treatment device (100) according to the preceding claim, wherein
- the device (100) comprises a plurality of consecutive wet-milling stages (104, 105); and
- in particular a fineness degree of the consecutive wet-milling stages (104, 105) increases with each wet-milling stage (104, 105).

3. The treatment device (100) according to any one of the preceding claims, wherein
- the device (100) comprises a shaft, in particular a drop shaft, which extends between the pyrolysis reactor (101) and the water container and is configured for transferring material (102) containing carbon black and originating from the pyrolysis reactor (101) directly to the water bath (103) in the water container;
- the shaft is in particular airtight; and
- the shaft is filled in particular at least partially with water.

4. The treatment device (100) according to any one of the preceding claims, wherein the device (100) is configured in such a manner that the material (102) containing carbon black is transferred from the pyrolysis reactor (101) to the water bath (103) without coming into contact with oxygen in the process.

5. The treatment device (100) according to any one of the preceding claims, wherein the device (100) comprises a separation module (106) which is configured to separate one or more foreign components (107), in particular metal, from the wet material containing carbon black following the at least one wet-milling stage (104, 105) in order to provide a purified wet material containing carbon black.

6. The treatment device (100) according to any one of the preceding claims, wherein the device (100) comprises at least one treatment module (108) which is configured to chemically clean and/or treat the wet material containing carbon black or a material derived therefrom, in particular a purified wet material containing carbon black, in order to provide a chemically treated wet material containing carbon black.

7. The treatment device (100) according to any one of the preceding claims, wherein the device (100) comprises at least one neutralizing module (109) which is configured to at least partially neutralize one or more chemical substances, in particular an acid and/or a lye, which were used in the at least one treatment module (108).

8. The treatment device (100) according to any one of the preceding claims, wherein the device (100) comprises a pelleting module (113) which is configured to press the material containing carbon black into pellets subsequent to the at least one dehydrating module (111).

9. The treatment device (100) according to claim 8, wherein the device (100) comprises a drying module (114) which is configured to dry the pellets.

10. A method (200) for treating a material (102) containing carbon black and originating from a pyrolysis reactor (101); the method (200) comprising the following steps:
- supplying (201) the material (102) containing carbon black and originating from the pyrolysis reactor (101) to a water bath (103) in a water container in order to yield a wet material containing carbon black;
- reducing (202) an average particle size of carbon black particles in the wet material containing carbon black using at least one wet-milling stage (104, 105), a wet-milling stage (104) being disposed directly in the water bath; and
- subsequently dehydrating (203) the wet material containing carbon black or a material derived therefrom.

## Revendications

1. Dispositif de traitement (100) pour un matériau (102) contenant du noir de carbone et provenant d'un réacteur de pyrolyse (101) ; le dispositif comprenant
- un réceptacle d'eau pour recevoir directement le matériau (102) contenant du noir de carbone et provenant du réacteur de pyrolyse (101) dans un bain d'eau (103), donnant ainsi un matériau humide contenant du noir de carbone ;
- au moins une étape de broyage humide (104, 105) qui est configurée pour réduire une taille moyenne de particules de noir de carbone dans le matériau humide contenant du noir de carbone, le dispositif (100) comprenant une étape de broyage humide (104) dans le réceptacle d'eau ; et
- au moins un module de déshydratation (111) pour la déshydratation du matériau humide contenant du noir de carbone ou d'un matériau résultant de celui-ci à la suite de ladite au moins une étape de broyage humide (104, 105).

2. Dispositif de traitement (100) selon la revendication précédente, dans lequel
- le dispositif (100) comprend une pluralité d'étapes de broyage humides (104, 105) consécutives ; et
- notamment un degré de finesse des étapes de broyage humides (104, 105) consécutives augmente avec chaque étape de broyage humide (104, 105).

3. Dispositif de traitement (100) selon l'une quelconque des revendications précédentes, dans lequel
- le dispositif (100) comprend un puits, notamment un puits de chute, qui s'étend entre le réacteur de pyrolyse (101) et le réceptacle d'eau et est configuré pour le transfert du matériau (102) contenant du noir de carbone et provenant du réacteur de pyrolyse (101) directement dans le bain d'eau (103) dans le réceptacle d'eau ;
- le puits est notamment étanche à l'air; et
- le puits est rempli d'eau notamment au moins en partie.

4. Dispositif de traitement (100) selon l'une quelconque des revendications précédentes, dans lequel le dispositif (100) est configuré de telle manière que le matériau (102) contenant du noir de carbone est transferé à partir du réacteur de pyrolyse (101) dans le bain d'eau (103) sans entrer en contact avec l'oxygène dans le processus.

5. Dispositif de traitement (100) selon l'une quelconque des revendications précédentes, dans lequel le dispositif (100) comprend un module de séparation (106) qui est configuré pour la séparation d'un ou plusieurs composants étranges, notamment du métal, du matériau humide contenant du noir de carbone à la suite de ladite au moins une étape de broyage humide (104, 105) afin de mettre un matériau humide purifié et contenant du noir de carbone à la disposition.

6. Dispositif de traitement (100) selon l'une quelconque des revendications précédentes, dans lequel the dispositif (100) comprend au moins un module de traitement (108) qui est configuré pour nettoyer chimiquement et/ou pour traiter le matériau humide contenant du noir de carbone ou un matériau résultant de celui-ci, notamment un matériau humide purifié contenant du noir de carbone, afin de mettre un matériau humide traité chimiquement et contenant du noir de carbone à la disposition.

7. Dispositif de traitement (100) selon l'une quelconque des revendications précédentes, dans lequel le dispositif (100) comprend au moins un module de neutralisation (109) qui est configurée pour neutraliser au moins en partie une ou plusieurs substances chimiques, notamment un acide et/ou une lessive, qui ont été utilisées dans ledit au moins un module de traitement (108).

8. Dispositif de traitement (100) selon l'une quelconque des revendications précédentes, dans lequel le dispositif (100) comprend un module de pelletisation (113) qui est configuré pour presser le matériau contenant du noir de carbone en granulés à la suite dudit au moins un module de déshydratation (111).

9. Dispositif de traitement (100) selon la revendication 8, dans lequel le dispositif (100) comprend un module de séchage (114) qui est configuré pour sécher les granules.

10. Procédé (200) pour le traitement d'un matériau (102) contenant du noir de carbone et provenant d'un réacteur de pyrolyse (101) ; le procédé (200) comprenant les étapes suivantes :
- amener (201) le matériau (102) contenant du noir de carbone et provenant du réacteur de pyrolyse (101) dans un bain d'eau (103) dans le réceptacle d'eau afin de donner un matériau humide contenant du noir de carbone ;
- réduire (202) une taille moyenne de particules de noir de carbone dans le matériau humide contenant du noir de carbone à l'aide d'au moins une étape de broyage humide (104, 105), une étape de broyage humide (104) étant disposée directement dans le bain d'eau ; et
- déshydrater (203) ensuite le matériau humide contenant du noir de carbone ou un matériau résultant de celui-ci.
